# EUROPÄISCHE PATENTANMELDUNG

(11) **EP 1 079 562 A2**
(43) Veröffentlichungstag der Anmeldung: **28.02.2001**
(21) Anmeldenummer: 00440220.2
(22) Anmeldetag: 31.07.2000
(51) Int. Cl.: H04J 14/02, H04B 10/152

(54) **Verfahren zum Übertragen eines Informationssignals**

(30) Priorität: 20.08.1999 DE 19939540
(71) Anmelder: ALCATEL, 75008 Paris (FR)
(72) Erfinder: Schmuck, Harald, 70825 Korntal-Münchingen (DE); Mittrich, Martin, 75242 Neuhausen (DE)
(74) Vertreter: Menzietti, Domenico, Dipl.-Ing

(57) **Zusammenfassung**

In einem Kommunikationsnetz mit einer Zentrale und mehreren Zwischeneinrichtungen werden in der Zentrale optische Signale erzeugt, die unmoduliert zu den Zwischeneinrichtungen übertragen werden, wo sie Modulatoren (M1, M2, M3, M4) zugeführt werden, um die optischen Signale mit zu übertragenden Informationssignale zu modulieren und anschließend von den Zwischeneinrichtungen zur Zentrale zu übertragen ohne die Notwendigkeit eigener Lichtquellen in der Zwischeneinrichtungen vorzusehen. Die optischen, unmodulierten Signale beinhalten beispielsweise CW-Licht. Alternativ beinhalten sie Trägerfrequenzen, die zusätzlich für das Verfahren des optischen Überlagerungsempfangs verwendet werden. Durch die Einführung von WDM kann sowohl im Vorwärtskanal als auch im Rückkanal die Übertragungsrate erhöht werden und es unterschiedlichen Zwischeneinrichtung ermöglicht werden, unterschiedliche Informationen bei gleichen Frequenzen zu übertragen.

## Beschreibung

Die Erfindung bezieht sich auf ein Verfahren zum Übertragen eines Informationssignals über den Rückkanal eines Kommunikationsnetzes mit einem Vorwärts- und einem Rückkanal sowie auf eine Sende/Empfangseinrichtung des Kommunikationsnetzes.

Kommunikationsnetze sind beispielsweise als Punkt-zu-Mehrpunkt Telekommunikationsnetze aufgebaut. Von einer Zentrale werden Informationen wie Sprache, Daten, Bilder über einen Vorwärtskanal zu einer Vielzahl von Endstellen, teils über Zwischeneinrichtungen übertragen. Von den Endstellen werden Informationen wie Sprache, Daten, Bilder über den Rückkanal zur Zentrale und von dort gegebenenfalls zu Endstellen oder einer anderen Zentrale übertragen. Anwendungen sind z.B. Telefonie, Internet, Video-on-demand, Bildtelefonie, Kabelfernsehen, Mobilfunk. Die Topologie des Kommunikationsnetzes ist beispielsweise ein HFC- oder HFR-Netz; HFC=Hybrid Fibre Coax, HFR=Hybrid Fibre Radio. Von der Zentrale bis zu mindestens einer Zwischeneinrichtung und gegebenenfalls direkt angeschlossenen Endstellen erfolgt die Übertragung bei HFC und HFR über optische Leitungen. Die Zwischeneinrichtungen werden bei HFC als ONU=Optische Netzabschlußeinrichtung oder BONT=Broadband Optical Network Termination bezeichnet, bei HFR BS=Base Station. An jede ONU und jeden BONT sowie jede BS sind in der Regel mehrere Endstellen angeschlossen, z.B. über Koaxialkabel oder Funk.

Es wird beispielsweise eine Wellenlänge verwendet, um Informationen von der Zentrale zu den Zwischeneinrichtungen zu übertragen. Dazu ist eine optische Lichtquelle, z.B. ein Laser oder eine Laserdiode in der Zentrale notwendig. Die Übertragung von Informationen von den Zwischeneinrichtungen zur Zentrale erfolgt über den Rückkanal unter Verwendung von einer weiteren Wellenlänge. Jede Zwischeneinrichtung benötigt daher eine Lichtquelle. Insbesondere bei der Verwendung von DWDM wird eine hohe Wellenlängenstabilität benötigt, da die einzelnen Wellenlängen einen geringen Frequenzabstand zueinander haben; DWDM=Dense Wavelength Division Multiplex. Die Zwischeneinrichtungen sind meist im Freien aufgebaut, d.h. nicht in einem temperierten Gebäude. So unterliegen sie den äußeren Temperaturschwankungen. Insbesondere die Wellenlängen von Laserlichtquellen sind allerdings sehr temperaturempfindlich, z.B. 12GHz/°C, so daß die hohe Anforderung an die Wellenlängenstabilität oftmals nicht eingehalten werden kann. Aufgrund der hohen Anzahl von Zwischeneinrichtungen in einem Kommunikationsnetz werden zudem entsprechend viele Laserlichtquellen benötigt. Laserlichtquellen sind vergleichsweise teuere Bauelemente, so daß die Implementierung eines Kommunikationsnetzes sehr kostenintensiv ist.

Es wurden bereits Lösungsansätze dahingehend gemacht, die Laserlichtquellen aus den Zwischeneinrichtungen zu entfernen, um zum einen Kosten zu sparen und andererseits die Temperaturabhängigkeit zu eliminieren.

In EP0461380 wird ein Funk-Nachrichtenübertragungssystem vorgeschlagen, bei dem eine Zwischeneinrichtung mit einem optischen Reflexionsmodulator ausgestattet ist, der eine zusätzlich von der Zentrale ausgesandte, unmodulierte Trägerfrequenz mit dem zu übertragenden Informationssignal moduliert und auf diese Art und Weise ohne eigene Lichtquelle Informationen über den Rückkanal zur Zentrale überträgt. Für die Übertragung von Informationen von der Zentrale zu den Zwischeneinrichtungen wird ein Spektrum von Trägerfrequenzen benutzt, die bei einer Wellenlänge übertragen werden. Eine Trägerfrequenz wird unmoduliert übertragen. Sie dient als Mischfrequenz. Die anderen Trägerfrequenzen werden mit den entsprechenden Informationssignalen moduliert. Auf der Empfangsseite wird die Ausgangsfrequenz für die Funksignale durch Mischen der Trägerfrequenz mit dem entsprechenden Informationssignal mit der unmodulierten Trägerfrequenz erzeugt. Verschiedene Zwischeneinrichtungen, z.B. Base Stations, die unterschiedliche Informationen bei der gleichen Funkfrequenz aussenden müssen, können mit diesem Verfahren nicht direkt bedient werden. Jede entsprechende Zwischeneinrichtung müßte dazu mit einer separaten optischen Leitung versorgt werden, was kostenintensiv ist.

In EP0809372 wird ein Teil einer von der Zentrale ausgesandten, modulierten Wellenlänge in einer Zwischeneinrichtung einem Modulator zugeführt, der im TDM-Betrieb einzelne Zeitschlitze mit dem zu übertragenden Informationssignal moduliert, das im anschließenden CDMA-Kodierer kodiert und anschließend über den Rückkanal zur Zentrale übertragen wird; TDM=Time Division Multiplex, CDMA=Code Division Multiple Access.

Die Erfindung stellt drei zusammenhängende Lösungen vor, die einen temperaturunabhängigen Betrieb eines Kommunikationsnetzes ermöglichen.

Das Verfahren nach Anspruch 1 ist insbesondere dadurch gekennzeichnet, daß im Vorwärtskanal optische Signale im Wellenlängenmultiplex übertragen werden, wobei die optischen Signale aus Paaren von optischen Signalen bestehen, die zur Übertragung von Signalen nach dem Verfahren des optischen Überlagerungsempfangs dienen, wobei jedes Paar jeweils ein moduliertes und ein unmoduliertes optisches Signal beinhaltet, daß aus den über den Vorwärtskanal empfangenen optischen Signalen ein Teil des unmodulierten optischen Signals eines bestimmten Paars extrahiert wird, und daß das extrahierte optische Signal mit dem zu übertragenden Informationssignal moduliert und über den Rückkanal ausgesandt wird. Bei diesem Verfahren werden einzelne Wellenlängen doppelt ausgenutzt. Ein unmoduliertes optisches Signal einer bestimmten Wellenlänge dient zum einen zum Mischen mit einem bestimmten modulierten optischen Signal zur Generierung der gewünschten Aussendefrequenz (für die Anwendung im HFR) und zum anderen zum Modulieren mit einem zu übertragenden Informationssignal. Dies stellt eine optimale Ausnutzung vorhandener Wellenängenkapazitäten dar, und ermöglicht es bei gleicher Übertragungskapazität mehr Informationssignale zu übertragen, insbesondere wenn das Verfahren des optischen Überlagerungsempfangs verwendet wird.

Die zugehörige Sende-/Empfangseinrichtung nach Anspruch 2 ist insbesondere dadurch gekennzeichnet, daß eine Empfangseinheit 15 vorgesehen ist, um im Vorwärtskanal im Wellenlängenmultiplex übertragene optische Signale beinhaltend mindestens ein moduliertes und mindestens ein unmoduliertes optisches Signal zu empfangen sowie ein bestimmtes, unmoduliertes optisches Signal aus den optischen Signalen zu extrahieren, daß eine Auskoppeleinheit vorgesehen ist, um aus dem extrahierten optischen Signal einen Teil zu extrahieren und diesen Teil einem Modulator weiterzuleiten, daß der Modulator geeignet ist, das extrahierte optische Signal mit einem zu übertragenden Informationssignal zu modulieren, und über den Rückkanal des Kommunikationsnetzes zu übertragen.

Das Verfahren nach Anspruch 3 ist insbesondere dadurch gekennzeichnet, daß im Vorwärtskanal optische Signale im Wellenlängenmultiplex übertragen werden, wobei die optischen Signale mindestens ein moduliertes und mindestens ein unmoduliertes optisches Signal beinhalten, daß das unmodulierte Signal als CW-Licht übertragen wird, daß aus den über den Vorwärtskanal empfangenen optischen Signalen ein bestimmtes, unmoduliertes optisches Signal extrahiert wird, und daß das extrahierte optische Signal mit dem zu übertragenden Informationssignal moduliert und anschließend über den Rückkanal ausgesandt wird. Bei diesem Verfahren steht die ausschließliche Reservierung einzelner Wellenlängen zur Übertragung von CW-Licht im Vordergrund. Durch die Verwendung von CW-Licht wird es möglich im Rückkanal beliebige Arten der Modulation des zu übertragenden Informationssignals durchzuführen. So kann beispielsweise TDMA, CDMA oder FDMA verwendet werden; TDMA=Time Division Multiple Access, CDMA=Code Division Multiple Access, FDMA=Frequency Division Multiple Access. Dieser Vorteil wird erkauft durch die Bereitstellung und Reservierung einzelner Wellenlängen, über die keine Informationen von der Zentrale zu den Zwischeneinrichtungen übertragen werden können. Bei der Verwendung von CW-Licht treten ferner keine Synchronisationprobleme auf.

Das Verfahren nach Anspruch 4 ist insbesondere dadurch gekennzeichnet, daß im Vorwärtskanal optische Signale im Wellenlängenmultiplex übertragen werden, wobei die optischen Signale mindestens ein moduliertes und mindestens zwei unmodulierte optische Signale auf verschiedenen Wellenlängen beinhalten, daß aus den über den Vorwärtskanal empfangenen optischen Signalen mindestens zwei bestimmte, unmodulierte optische Signale extrahiert werden, und daß die extrahierten optischen Signale jeweils mit einem zu übertragenden Informationssignal moduliert und anschließend gemeinsam über den Rückkanal ausgesandt werden. Bei diesem Verfahren steht im Vordergrund, das erstmalig Wellenlängenmultiplex in einer Zwischeneinrichtung durchgeführt wird. Durch die Einführung von Wellenlängenmultiplex können mehr Informationen über die gleiche optische Leitung übertragen werden. So kann beispielsweise eine Erweiterung des Netzes auf einfache Art und Weise durch Einfügen von Modulatoren und Multiplexern in den Zwischeneinrichtungen erfolgen anstatt neue Zwischeneinrichtungen, eine neue Topologie des Netze, etc. vorzusehen. Dies erspart insbesondere Herstellungs-, Installations- und Wartungskosten.

Die zugehörige Sende-/Empfangseinrichtung nach Anspruch 5 ist insbesondere dadurch gekennzeichnet, daß eine Empfangseinheit vorgesehen ist, um im Vorwärtskanal im Wellenlängenmultiplex übertragene optische Signale beinhaltend mindestens ein moduliertes und mindestens zwei unmodulierte optische Signale auf verschiedenen Wellenlängen zu empfangen sowie mindestens zwei bestimmte, unmodulierte optische Signale aus den optischen Signalen zu extrahieren, daß mindestens zwei Modulatoren vorgesehen sind, um die mindestens zwei extrahierten optischen Signale jeweils mit einem zu übertragenden Informationssignal zu modulieren, und daß ein Multiplexer vorgesehen ist, um die modulierten Signale im Wellenlängenmultiplex gemeinsam über den Rückkanal des Kommunikationsnetzes zu übertragen.

Insbesondere das Verfahren nach Anspruch 5 läßt sich auf einfache Art und Weise mit den jedem der Verfahren nach Anspruch 1 und 3 kombinieren, wie beispielsweise aus der nachfolgenden Beschreibung ersichtlich.

Im folgenden werden drei Ausführungsbeispiele der Erfindung unter Zuhilfenahme von drei Figuren erläutert. Es zeigen:
- Fig. 1: eine schematische Darstellung eines ersten erfindungsgemäßen Kommunikationsnetzes,
- Fig. 2: eine schematische Darstellung eines zweiten erfindungsgemäßen Kommunikationsnetzes und
- Fig. 3: eine schematische Darstellung eines dritten erfindungsgemäßen Kommunikationsnetzes.

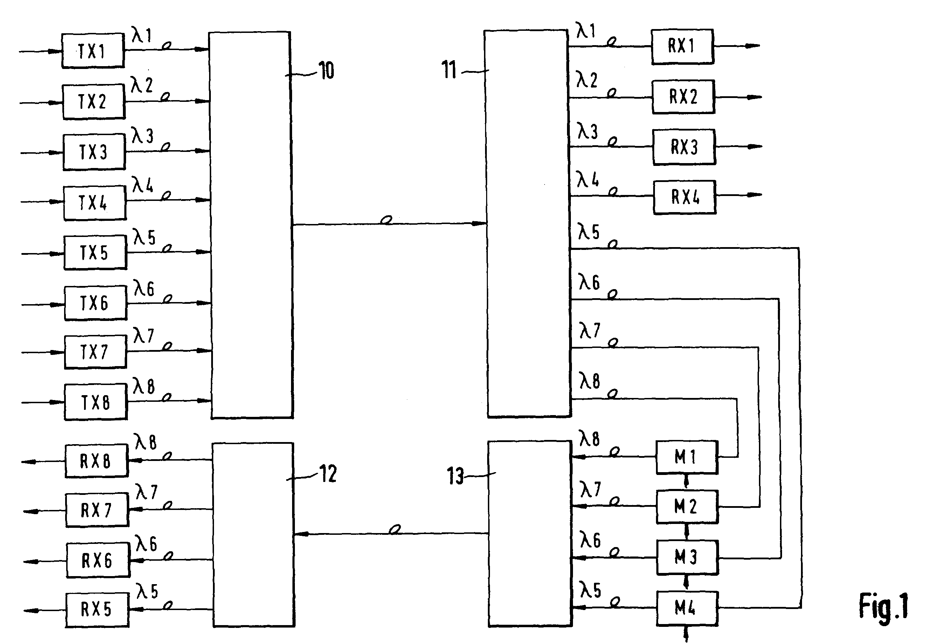

Das erste Ausführungsbeispiel wird nun unter Zuhilfenahme von Fig. 1 erläutert. Fig. 1 zeigt ein erstes erfindungsgemäßes Kommunikationsnetz. Das Kommunikationnetz ist als Punkt-zu-Mehrpunkt Netz aufgebaut beinhaltend eine Zentrale, die über optische Leitungen mit mehreren Zwischeneinrichtungen verbunden ist, von denen eine dargestellt ist. Aus Gründen der Übersichtlichkeit wurde auf die Darstellung der Vielzahl von Endstellen, die mit den Zwischeneinrichtungen oder direkt mit der Zentrale verbunden sind, verzichtet. Das Kommunikotionsnetz ist beispielsweise als HFC- oder HFR-Netz ausgeführt. Alternativ kann das Kommunikationsnetz aus optischen Leitungen zwischen Zentrale und Zwischeneinrichtungen und Kupferleitungen zwischen Zwischeneinrichtungen und Endstellen über die Informationssignale beispielsweise im ADSL-Fomat oder dergleichen übertragen werden; ADSL=Asynchronous Digital Subscriber Line. Das Kommunikationsnetz kann auch aus Mischformen obiger Netzstrukturen bestehen. Für die Implementierung des Vorwärtskanals und des Rückkanals können wie dargestellt zwei separate optische Leitungen verwendet werden oder eine gemeinsame. Im einfachsten Fall kann das Kommunikationsnetz auch als Punkt-zu-Punkt Verbindung zwischen zwei Sende/Empfangseinrichtungen ausgeführt sein.

Von der Zentrale werden Informationssignale im DWDM-Verfahren zu den Zwischeneinrichtungen übertragen. Durch Zuweisung von vier Wellenlängen zu einer Zwischeneinrichtung kann beispielsweise eine Basisstation über den Vorwärtskanal mit der vierfachen Datenmenge versorgt werden. Für jeden 90° Sektor einer Basisstation wird eine Wellenlänge verwendet. Bei DWDM-Netzes ist ein Kanalabstand von 50, 100, 200 GHz möglich. Eine hohe Wellenlängenstabilität ist erforderlich. Laserlichtquellen weisen eine starke Temperaturempfindlichkeit auf: ca. 12GHz/°C im Gegensatz zu anderen DWDM-Komponenten wie optische Filter, ca. 700MHz/°C und AWG, ca. 1.5GHz/°C. Außerhalb von Gebäuden kann bei starker Witterung eine Temperaturschwankung von -40°C bis +85°C auftreten. Insbesondere bei einem Kanalabstand von 50GHz ist die Wellenlängenstabilität dann nicht mehr gegeben. Es ist daher vorgesehen die Laserlichtquellen aus den Zwischeneinrichtungen zu entfernen und in die Zentrale zu verlagern, die innerhalb eines Gebäudes angeordnet ist und obigen Temperaturschwankungen nicht ausgesetzt ist.

Die Zentrale beinhaltet acht optische Sender TX1, TX2, TX3, TX4, TX5, TX6, TX7, TX8, einen Multiplexer 10, einen Demultiplexer 12 und vier optische Empfänger RX5, RX6, RX7, RX8.

Die dargestellte Zwischeneinrichtung beinhaltet eine Empfangseinrichtung 11, vier optische Empfänger RX1, RX2, RX3, RX4, vier optische Modulatoren Ml, M2, M3, M4 und einen Multiplexer 13.

Der optische Sender TX1 beinhaltet eine optische Lichtquelle. Diese ist beispielsweise ein Laser oder eine Laserdiode. Die optische Lichtquelle wird im CW-Betrieb betrieben, erzeugt also CW-Licht. Diese Licht wird direkt durch das zu übertragende Informationssignal oder indirekt über einen elektro/optischen Modulator mit dem zu übertragenden Informationssignal moduliert. Das modulierte Ausgangssignal wird dem Multiplexer 10 zugeführt. Der optische Sender TX1 erzeugt moduliertes Licht einer ersten Wellenlänge λ1.

Die optische Sender TX2, TX3, TX4 arbeiten nach dem gleichen Prinzip wie der optische Sender TX1. Sie erzeugen ebenfalls ein optisch moduliertes Signal, das dem Multiplexer 10 zugeführt wird. Der Unterschied besteht darin, daß erstens Informationssignale anderen Inhalts verwendet werden. Zweitens erzeugt jeder optische Sender TX1, TX2, TX3, TX4 Licht einer anderen Wellenlänge. Der optische Sender TX2 erzeugt Licht der Wellenlänge λ2. Der optische Sender TX3 erzeugt Licht der Wellenlänge λ3. Der optische Sender TX4 erzeugt Licht der Wellenlänge λ4.

Der optische Sender TX5 beinhaltet eine optische Lichtquelle. Diese ist beispielsweise ein Laser oder eine Laserdiode. Die optische Lichtquelle wird im CW-Betrieb betrieben, erzeugt also CW-Licht. Diese Licht wird direkt zum Multiplexer 10 übertragen. Das generierte Licht wird nicht moduliert. Es dient dazu, über den Vorwärtskanal zu den Zwischeneinrichtungen übertragen zu werden, dort jeweils mit einem zu übertragenden Informationssignal moduliert zu werden und anschließend über den Rückkanal zur Zentrale zurück übertragen zu werden, um die übertragenen Informationssignale auszuwerten.

Die optische Sender TX6, TX7, TX8 arbeiten nach dem gleichen Prinzip wie der optische Sender TX5. Sie erzeugen ebenfalls ein unmoduliertes, optisches Signal, das dem Multiplexer 10 zugeführt wird. Der Unterschied besteht darin, daß alle optischen Sender TX1, TX2, TX3, TX4, TX5, TX6, TX7, TX8 Licht unterschiedlicher Wellenlänge erzeugen.

Der Multiplexer 10 ist beispielsweise als Wellenlängenmultiplexer ausgeführt. Der Multiplexer beinhaltet dazu beispielsweise DWDM-Komponente, wie optische Splitter, optische Combiner oder dgl.

Die Empfangseinrichtung 11 empfängt die von der Zentrale über den Vorwärtskanal ausgesandten optischen Signale. Die Empfangseinrichtung 11 beinhaltet beispielsweise einen Wellenlängendemultiplexer inklusive DWDM-Komponenten, um die empfangenen optischen Signale in einzelne Signale unterschiedlicher Wellenlänge aufzuteilen. Am Ausgang der Empfangseinrichtung 11 stehen dann beispielsweise acht verschiedene Signale mit acht verschiedenen Wellenlängen zur Verfügung. Vier dieser Signale werden zu den vier optischen Empfängern RX1, RX2, RX3, RX4 weitergeleitet. In jedem Empfänger RX1, RX2, RX3, RX4 erfolgt eine Demodulation der empfangenen Signale, so daß die übertragenen Informationssignale detektiert und ausgewertet oder weiterverarbeitet werden können. Alternativ findet auch nur eine Umsetzung der empfangenen Signale statt, z.B. um sie im richtigen Format über Funk an entsprechende Endstellen weiterzuleiten. Die vier Signale am Ausgang der Empfangseinrichtung 11 mit den Wellenlängen λ5, λ6, λ7, λ8 sind unmoduliert. Sie werden den Modulatoren M1, M2, M3, M4 zugeführt. Die Modulatoren M1, M2, M3, M4 sind elektro/optische Modulatoren, die die Signale mit den Wellenlängen λ5, λ6, λ7, λ8 jeweils mit zu übertragenden Informationssignalen modulieren. Die zu übertragenden Signale stammen beispielsweise von Endstellen, die an die Zwischeneinrichtung angeschlossen sind. Die Informationssignale beinhalten beispielsweise Sprache, Daten und/oder Bilder für Telefonie, Internet, E-Mail, Bildtelefonie, etc. Die Modulation erfolgt beispielsweise mit TDMA, CDMA oder FDMA. Die so modulierten Signale werden Multiplexer 13 zugeführt. Multiplexer 13 ist beispielsweise als Wellenlängenmultiplexer ausgeführt. Multiplexer 13 beinhaltet dazu beispielsweise DWDM-Komponenten, wie optische Splitter, optische Combiner, optische Koppler oder dgl. Die zusammengefaßten optischen Signale werden dann gemeinsam über den Rückkanal zur Zentrale übertragen.

Demultiplexer 12, aufgebaut aus DWDM-Komponenten empfängt die optischen Signale mit den Wellenlängen λ5, λ6, λ7, λ8, teilt sie in vier Signale mit jeweils einer Wellenlänge auf und leitet sie an die vier optische Empfänger RX5, RX6, RX7, RX8 weiter. In jedem optischen Empfänger RX5, RX6, RX7, RX8 wird das empfangene optische Signal demoduliert und anschließend einer Verarbeitungseinrichtung zugeführt, die die Auswertung des demodulierten Informationssignals übernimmt. Alternativ wird nur eine Umsetzung durchgeführt, um ein entsprechendes Informationssignal direkt über den Vorwärtskanal weiterzuleiten. Die Zentrale dient dann z.B. als Relaisstation oder als Vermittlung, z.B. bei einer Telefonverbindung zwischen zwei an die Zentrale angeschlossene Endstellen.

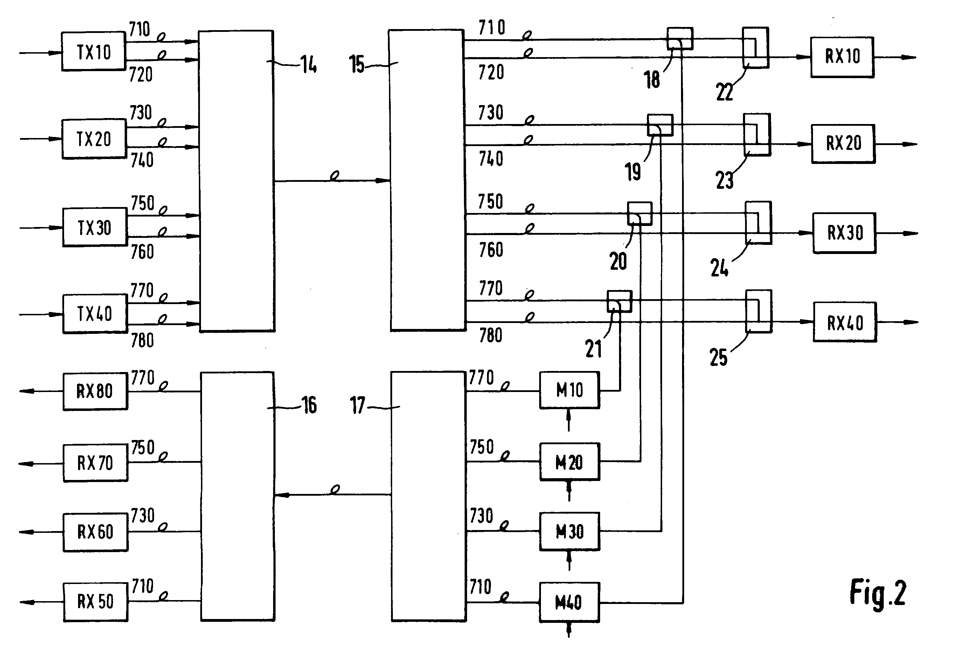

Das zweite Ausführungsbeispiel wird nun unter Zuhilfenahme von Fig. 2 erläutert. Fig. 2 zeigt ein zweites erfindungsgemäßes Kommunikationsnetz. Das Kommunikationsnetz dient der optischen Übertragung von Millimeterwellensignalen in WDM-Technik. Die Trägerfrequenzen liegen beispielsweise im Bereich 20GHz bis 60GHz. Anwendungen sind insbesondere die Mobilfunktechnik mit optischen Zubringern zu Base Stations, die Zellen mit einem Zellradius von 10m bis 2km versorgen. Es wird vom Verfahren des optischen Überlagerungsempfangs unter Verwendung sog. heterodyne sources Gebrauch gemacht. Die heterodyne sources sind optische Lichtquellen, die zwei Trägerfrequenzen erzeugen, die eine wird unmoduliert übertragen, die andere moduliert mit dem zu übertragenden Informationssignal. Auf der Empfangsseite wird durch Mischen beider Trägerfrequenzen die gewünschte Ausgangsfrequenz zur Aussendung von Funksignalen beinhaltend das zu übertragene Signal erzeugt. Mindestens zwei unmodulierte Trägerfrequenzen und mindestens zwei mit Informationssignalen modulierte Trägerfrequenzen werden auf mindestens zwei unterschiedlichen Wellenlängen übertragen. Dadurch wird erreicht, daß verschiedene Zwischeneinrichtungen, z.B. Base Stations unterschiedliche Informationen auf gleichen Frequenzen aussenden können. Ein erstes Trägerfrequenzpaar mit einem unmodulierten und einem mit einem ersten Informationssignal modulierten Träger, deren Frequenzabstand dem eines zweiten Trägerfrequenzpaares mit einem unmodulierten und einem zweiten Informationssignal modulierten Träger entspricht, wird bei einer ersten Wellenlänge übertragen, während das zweite Trägerfrequenzpaar bei einer zweiten Wellenlänge übertragen wird. Alternativ kann jede Trägerfrequenz bei einer Wellenlängen übertragen werden, so daß zur Übertragung der vier Trägerfrequenzen vier Wellenlängen benötigt werden. Es ist auch möglich, mittels drei Trägerfrequenzen, die mindestens bei zwei unterschiedlichen Wellenlängen übertragen werden, zwei unterschiedliche Informationen zu übertragen, indem eine Trägerfrequenz unmoduliert übertragen wird und als Referenz dient und die anderen beiden Trägerfrequenzen mit den Informationssignalen moduliert werden und jeweils den gleichen Frequenzabstand zur unmodulierten Trägerfrequenz aufweisen. Alternativ können bei einer Wellenlänge auch mehrere unmodulierte Referenzträgerfrequenzen verwendet werden, um auf diese Weise in unterschiedlichen Zwischeneinrichtungen gleiche Ausgangsfrequenzen für unterschiedliche Informationssignale erzeugen zu können. Dazu werden beispielsweise in aufsteigender Frequenzfolge eine Referenzfrequenz, drei modulierte Trägerfrequenzen, eine Referenzfrequenz, drei modulierte Trägerfrequenzen, etc. übertragen.

Das Kommunikationsnetz ist beispielsweise als Punkt-zu-Mehrpunkt Netz aufgebaut und als HFC- oder HFR-Netz ausgeführt. Das Kommunikationsnetz beinhaltet eine Zentrale von der aus über einen Vorwärtskanal Informationen zu mindestens einer Zwischeneinrichtung, von der aus Gründen der Übersichtlichkeit nur eine dargestellt ist, übertragen werden. Die Verbindung zwischen Zentrale und Zwischeneinrichtungen ist aus optischen Leitungen aufgebaut, beispielsweise optische Glasfaserleitungen. Eine Zwischeneinrichtung ist beispielsweise als Base Station oder ONU ausgeführt. Die Base Station versorgt eine Mobilfunkzelle, die ONU eine Anzahl von Endstellen, die als Kommunikationseinheit z.B. jeweils eine sog. Set-Top Box verwenden. Die Übertragung von den Zwischeneinrichtungen zur Zentrale erfolgt über den Rückkanal, der aus optischen Leitungen aufgebaut ist. Die optischen Leitungen können denjenigen für den Vorwärtskanal entsprechend. Dann erfolgt auf den optischen Leitungen ein bidirektionaler Betrieb. Alternativ können auch unterschiedliche Leitungen mit unidirektionalem Betrieb verwendet werden.

Die Zentrale beinhaltet vier optische Sender TX10, TX20, TX30, TX40, einen Multiplexer 14, einen Demultiplexer 16 und vier optische Empfänger RX50, RX60, RX70, RX80.

Die dargestellte Zwischeneinrichtung beinhaltet eine Empfangseinheit 15, vier Auskoppeleinheiten 18, 19, 20, 21, vier Koppeleinheiten 22, 23, 24, 25, vier optische Empfänger RX10, RX20, RX30, RX40, vier elektro/optische Modulatoren M10, M20, M30, M40 und einen Multiplexer 17. Als Minimalversion einer Zwischeneinrchtung, die beispielsweise nur für den unidirektionalen Betrieb ausgerichtet ist, sind nur die Empfangseinheit 15, eine Koppeleinheit, z.B. 22, und ein optischer Empfänger, z.B. RX10 erforderlich. Eine andere Zwischeneinrichtung könnte dann beispielsweise Empfangseinheit 15, Koppeleinheit 23 und optischen Empfänger RX20 beinhalten. Zur Ermöglichung des bidirektionalen Betriebs ist das Einfügen einer Auskoppeleinheit, z.B. 18 bzw. 19 und eines elektro/optischen Modulators, z.B. M10 bzw. M20 ausreichend.

Der optische Sender TX10 beinhaltet zwei optische Lichtquellen, z.B. Laser oder Laserdioden zur Erzeugung von zwei unterschiedlichen Wellenlängen λ10 und λ20. Auf der Wellenlänge λ10 wird eine unmodulierte Trägerfrequenz übertragen, auf der Wellenlänge λ20 eine mit einem Informationssignal modulierte Trägerfrequenz. Die Wellenlängen λ10 und λ20 werden dem Multiplexer 14 zugeführt. Der Multiplexer ist als Wellenlängenmultiplexer ausgeführt, um alle Wellenlängen über eine gemeinsame optische Leitung zu übertragen.

Die optische Sender TX20, TX30, TX40 arbeiten nach dem gleichen Prinzip wie der optische Sender TX10, mit dem Unterschied, daß andere Informationssignale übertragen werden.

Alle optischen Sender TX10, TX20, TX30, TX40 können dergestalt erweitert werden, daß sie auf einer Wellenlängen mehr als eine Trägerfrequenz übertragen. Von der Zentrale werden dann mehrere Wellenlängen zu den Zwischeneinrichtungen übertragen, wobei jede Wellenlänge mehrere Trägerfrequenzen überträgt. Dadurch wird die Kapazität der optischen Leitungen optimal ausgenutzt. Es muß dann eine definierte Zuordnung von Trägerfrequenzen zu Zwischeneinrichtungen erfolgen. Jede Zwischeneinrichtung hat dann beispielsweise Filter, z.B. Bandpaßfilter, zum Selektieren der ihr zugeordneten Trägerfrequenzen.

Die Empfangseinrichtung 15 beinhaltet einen Demultiplexer, der die empfangenen optischen Signale nach Wellenlängen aufteilt. Die Wellenlängen λ10 und λ20 werden über die Auskoppeleinheit 18 und die Koppeleinheit 22 dem optischen Empfänger RX10 zugeführt. Die Wellenlängen λ30 und λ40 werden über die Auskoppeleinheit 19 und die Koppeleinheit 23 dem optischen Empfänger RX20 zugeführt. Die Wellenlängen λ50 und λ60 werden über die Auskoppeleinheit 20 und die Koppeleinheit 24 dem optischen Empfänger RX30 zugeführt. Die Wellenlängen λ70 und λ80 werden über die Auskoppeleinheit 21 und die Koppeleinheit 25 dem optischen Empfänger RX40 zugeführt.

Alle Auskoppeleinheiten 18, 19, 20, 21 sind z.B. als asymmetrische optische Koppler ausgeführt. Sie koppeln aus dem empfangenen optischen Signal einer bestimmten Wellenlänge einen Teil heraus, um ihn einem der elektro/optischen Modulatoren M10, M20, M30, M40 zuzuführen. Der ausgekoppelte Teil, der z.B. 30% des empfangenen Signals beträgt und eine unmodulierte Trägerfrequenz beinhaltet, wird dazu verwendet ein Informationssignal über den Rückkanal zur Zentrale zu übertragen. Die unmodulierte Trägerfrequenz wird im entsprechenden elektro/optischen Modulator M10, M20, M30, M40 moduliert und anschließend dem Multiplexer 17 zugeführt. Multiplexer 17 ist als Wellenlängenmultiplexer ausgeführt, um die zu übertragenden Signale gemeinsam über eine optische Leitung zu übertragen. Dem Multiplexer 17 ist gegebenenfalls ein optischer Verstärker nachgeschaltet.

Alle Koppeleinheiten 22, 23, 24, 25 sind z.B. als optische Koppler ausgeführt, um die empfangenen zusammengehörenden optischen Signale miteinander zu verbinden und gemeinsam dem entsprechenden optischen Empfänger RX10, RX20, RX30, RX40 zuzuführen, in dem eine Verarbeitung erfolgt oder eine Weiterleitung, z.B. als Funksignal.

Eine Auskoppeleinheit mit zugehöriger Koppeleinheit kann auch als ein einzelnes Bauelement ausgeführt sein durch Verwendung eines asymmetrischen, wellenlängenabhängigen optischen Kopplers mit zwei Eingängen und zwei Ausgängen.

Die über den Rückkanal übertragenen optischen Signale werden in der Zentrale im Demultiplexer 16 nach Wellenlängen aufgeteilt und jede Wellenlänge wird einem optischen Empfänger RX50, RX60, RX70, RX80 zugeführt, der die Auswertung übernimmt.

Multiplexer 14 und 17, Empfangseinheit 15 sowie Demultiplexer 16 können auch aus AWGs aufgebaut sein, AWG=Arrayed Waveguide. Dies reduziert die Herstellungskosten.

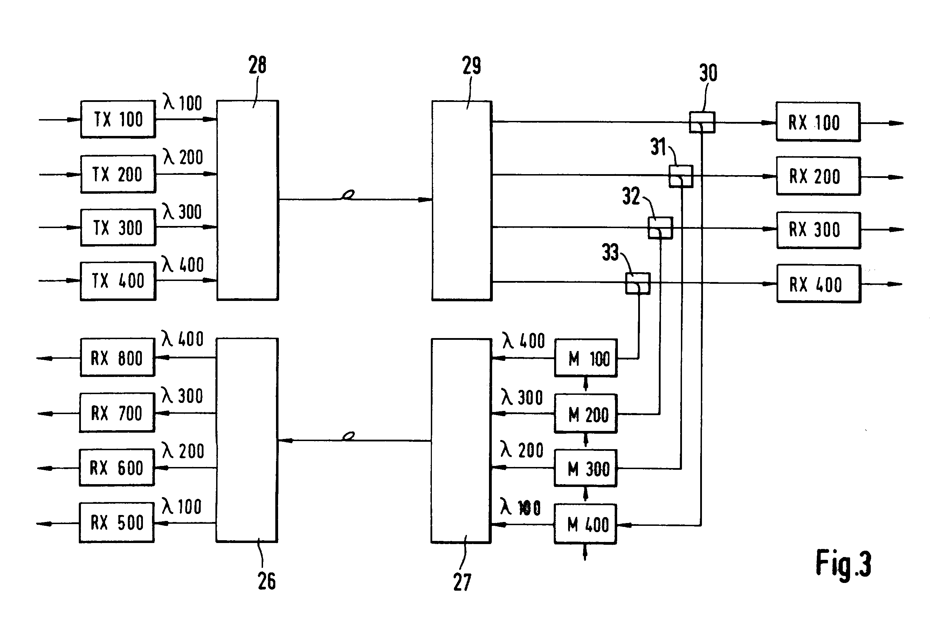

Das dritte Ausführungsbeispiel wird nun unter Zuhilfenahme von Fig. 3 erläutert. Fig. 3 zeigt ein drittes erfindungsgemäßes Kommunikationsnetz. Das Kommunikationnetz ist als Punkt-zu-Mehrpunkt Netz aufgebaut beinhaltend eine Zentrale, die über optische Leitungen mit mehreren Zwischeneinrichtungen verbunden ist, von denen eine dargestellt ist. Aus Gründen der Übersichtlichkeit wurde auf die Darstellung der Vielzahl von Endstellen, die mit den Zwischeneinrichtungen oder direkt mit der Zentrale verbunden sind, verzichtet. Das Kommunikationsnetz ist beispielsweise als HFC- oder HFR-Netz ausgeführt. Alternativ kann das Kommunikationsnetz aus optischen Leitungen zwischen Zentrale und Zwischeneinrichtungen und Kupferleitungen zwischen Zwischeneinrichtungen und Endstellen über die Informationssignale beispielsweise im ADSL-Fomat oder dergleichen übertragen werden; ADSL=Asynchronous Digital Subscriber Line. Das Kommunikationsnetz kann auch aus Mischformen obiger Netzstrukturen bestehen. Für die Implementierung des Vorwärtskanals und des Rückkanals können wie dargestellt zwei separate optische Leitungen verwendet werden oder eine gemeinsame. Im einfachsten Fall kann das Kommunikationsnetz auch als Punkt-zu-Punkt Verbindung zwischen zwei Sende/Empfangseinrichtungen ausgeführt sein.

Von der Zentrale werden Informationssignale im DWDM-Verfahren zu den Zwischeneinrichtungen übertragen. Durch Zuweisung von vier Wellenlängen zu einer Zwischeneinrichtung kann beispielsweise eine Basisstation über den Vorwärtskanal mit der vierfachen Datenmenge versorgt werden. Für jeden 90° Sektor einer Basisstation wird eine Wellenlänge verwendet. Bei DWDM-Netzes ist ein Kanalabstand von 50, 100, 200 GHz möglich. Eine hohe Wellenlängenstabilität ist erforderlich. Laserlichtquellen weisen eine starke Temperaturempfindlichkeit auf: ca. 12GHz/°C im Gegensatz zu anderen DWDM-Komponenten wie optische Filter, ca. 700MHz/°C und AWG, ca. 1.5GHz/°C. Außerhalb von Gebäuden kann bei starker Witterung eine Temperaturschwankung von -40°C bis +85°C auftreten. Insbesondere bei einem Kanalabstand von 50GHz ist die Wellenlängenstabilität dann nicht mehr gegeben. Es ist daher vorgesehen die Laserlichtquellen aus den Zwischeneinrichtungen zu entfernen und in die Zentrale zu verlagern, die innerhalb eines Gebäudes angeordnet ist und obigen Temperaturschwankungen nicht ausgesetzt ist.

Die Zentrale beinhaltet vier optische Sender TX100, TX200, TX300, TX400, einen Multiplexer 28, einen Demultiplexer 26 und vier optische Empfänger RX500, RX600, RX700, RX800.

Die dargestellte Zwischeneinrichtung beinhaltet eine Empfangseinrichtung 29, vier optische Empfänger RX100, RX200, RX300, RX400, vier Auskoppeleinheiten 30, 31, 32, 33, vier optische Modulatoren M100, M200, M300, M400 und einen Multiplexer 27.

Der optische Sender TX100 beinhaltet eine optische Lichtquelle. Diese ist beispielsweise ein Laser oder eine Laserdiode. Die optische Lichtquelle wird im CW-Betrieb betrieben, erzeugt also CW-Licht. Diese Licht wird direkt durch das zu übertragende Informationssignal oder indirekt über einen elektro/optischen Modulator mit dem zu übertragenden Informationssignal moduliert. Das modulierte Ausgangssignal wird dem Multiplexer 28 zugeführt. Der optische Sender TX100 erzeugt moduliertes Licht einer ersten Wellenlänge λ100. Als Modulationsverfahren wird beispielsweise TDM verwendet; TDM=Time Division Multiplex. Nicht alle vorhandenen Zeitschlitze werden zur Übertragung von Informationen von der Zentrale zu den Zwischeneinrichtungen genutzt. Die nicht zur Übertragung genutzten Zeitschlitze werden dazu benutzt, Informationen von den Zwischeneinrichtungen zur Zentrale zu übertragen ohne optische Sender in den Zwischeneinrichtungen zu benutzen. Die Zwischeneinrichtungen können in den vorgesehenen Zeitschlitzen TDMA, FDMA oder CDMA nutzen, TDMA=Time Division Multiple Access, FDMA=Frequency Division Multiple Access, CDMA=Code Division Multiple Access. Anstelle von TDM kann als Modulationsverfahren auch FDM oder CDM genutzt werden; FDM=Frequency Division Multiplex, CDM=Code Division Multiplex. Bei FDM wird ein Teil der verfügbaren Frequenzen für die Übertragung von Informationen von der Zentrale zu den Zwischeneinrichtungen genutzt, der Rest für die Übertragung von Informationen von den Zwischeneinrichtungen zur Zentrale. Bei CDM wird ein Teil der verfügbaren Codes für die Übertragung von Informationen von der Zentrale zu den Zwischeneinrichtungen genutzt, der Rest für die Übertragung von Informationen von den Zwischeneinrichtungen zur Zentrale.

Die optische Sender TX200, TX300, TX400 arbeiten nach dem gleichen Prinzip wie der optische Sender TX100. Sie erzeugen ebenfalls ein optisch moduliertes Signal, das dem Multiplexer 28 zugeführt wird. Der Unterschied besteht darin, daß erstens Informationssignale anderen Inhalts verwendet werden. Zweitens erzeugt jeder optische Sender TX100, TX200, TX300, TX400 Licht einer anderen Wellenlänge. Der optische Sender TX200 erzeugt Licht der Wellenlänge λ200. Der optische Sender TX300 erzeugt Licht der Wellenlänge λ300. Der optische Sender TX400 erzeugt Licht der Wellenlänge λ400.

Der Multiplexer 28 ist beispielsweise als Wellenlängenmultiplexer ausgeführt. Der Multiplexer beinhaltet dazu beispielsweise DWDM-Komponente, wie optische Splitter, optische Combiner oder dgl.

Die Empfangseinrichtung 29 empfängt die von der Zentrale über den Vorwärtskanal ausgesandten optischen Signale. Die Empfangseinrichtung 29 beinhaltet beispielsweise einen Wellenlängendemultiplexer inklusive DWDM-Komponenten, um die empfangenen optischen Signale in einzelne Signale unterschiedlicher Wellenlänge aufzuteilen. Am Ausgang der Empfangseinrichtung 29 stehen dann beispielsweise acht verschiedene Signale mit acht verschiedenen Wellenlängen zur Verfügung. Vier dieser Signale werden zu den vier optischen Empfängern RX100, RX200, RX300, RX400 weitergeleitet. In jedem Empfänger RX100, RX200, RX300, RX400 erfolgt eine Demodulation der empfangenen Signale, so daß die übertragenen Informationssignale detektiert und ausgewertet oder weiterverarbeitet werden können. Alternativ findet auch nur eine Umsetzung der empfangenen Signale statt, z.B. um sie im richtigen Format über Funk an entsprechende Endstellen weiterzuleiten.

Alle Auskoppeleinheiten 30, 31, 32, 33 sind z.B. als asymmetrische optische Koppler ausgeführt. Sie koppeln aus dem empfangenen optischen Signal einer bestimmten Wellenlänge einen Teil heraus, um ihn einem der elektro/optischen Modulatoren M100, M200, M300, M400 zuzuführen. Der ausgekoppelte Teil, der z.B. 30% des empfangenen Signals beträgt wird dazu verwendet ein Informationssignal über den Rückkanal zur Zentrale zu übertragen.

Die Modulatoren M100, M200, M300, M400 sind elektro/optische Modulatoren, die die Signale mit den Wellenlängen λ100, λ200, λ300, λ400 jeweils mit zu übertragenden Informationssignalen modulieren. Die zu übertragenden Signale stammen beispielsweise von Endstellen, die an die Zwischeneinrichtung angeschlossen sind. Die Informationssignale beinhalten beispielsweise Sprache, Daten und/oder Bilder für Telefonie, Internet, E-Mail, Bildtelefonie, etc. Die Modulation erfolgt beispielsweise mit TDMA, CDMA oder FDMA. Die so modulierten Signale werden Multiplexer 27 zugeführt. Multiplexer 27 ist beispielsweise als Wellenlängenmultiplexer ausgeführt. Multiplexer 27 beinhaltet dazu beispielsweise DWDM-Komponenten, wie optische Splitter, optische Combiner, optische Koppler oder dgl. Die zusammengefaßten optischen Signale werden dann gemeinsam über den Rückkanal zur Zentrale übertragen.

Demultiplexer 26, aufgebaut aus DWDM-Komponenten empfängt die optischen Signale mit den Wellenlängen λ100, λ200, λ300, λ400, teilt sie in vier Signale mit jeweils einer Wellenlänge auf und leitet sie an die vier optische Empfänger RX500, RX600, RX700, RX800 weiter. In jedem optischen Empfänger RX500, RX600, RX700, RX800 wird das empfangene optische Signal demoduliert und anschließend einer Verarbeitungseinrichtung zugeführt, die die Auswertung des demodulierten Informationssignals übernimmt. Alternativ wird nur eine Umsetzung durchgeführt, um ein entsprechendes Informationssignal direkt über den Vorwärtskanal weiterzuleiten. Die Zentrale dient dann z.B. als Relaisstation oder als Vermittlung, z.B. bei einer Telefonverbindung zwischen zwei an die Zentrale angeschlossene Endstellen.

## Patentansprüche

1. Verfahren zum Übertragen eines Informationssignals über den Rückkanal eines Kommunikationsnetzes mit einem Vorwärts- und einem Rückkanal,
**dadurch gekennzeichnet,**
daß im Vorwärtskanal optische Signale im Wellenlängenmultiplex übertragen werden, wobei die optischen Signale aus Paaren von optischen Signalen bestehen, die zur Übertragung von Signalen nach dem Verfahren des optischen Überlagerungsempfangs dienen, wobei jedes Paar jeweils ein moduliertes und ein unmoduliertes optisches Signal beinhaltet, daß aus den über den Vorwärtskanal empfangenen optischen Signalen ein Teil des unmodulierten optischen Signals eines bestimmten Paars extrahiert wird, und daß das extrahierte optische Signal mit dem zu übertragenden Informationssignal moduliert und über den Rückkanal ausgesandt wird.

2. Sende-/Empfangseinrichtung eines Kommunikationsnetzes mit einem Vorwärts- und einem Rückkanal,
dadurch gekennzeichnet,
daß eine Empfangseinheit (15) vorgesehen ist, um im Vorwärtskanal im Wellenlängenmultiplex übertragene optische Signale beinhaltend mindestens ein moduliertes und mindestens ein unmoduliertes optisches Signal zu empfangen sowie ein bestimmtes, unmoduliertes optisches Signal aus den optischen Signalen zu extrahieren, daß eine Auskoppeleinheit (18, 19, 20, 21) vorgesehen ist, um aus dem extrahierten optischen Signal einen Teil zu extrahieren und diesen Teil einem Modulator (M10, M20, M30, M40) weiterzuleiten, daß der Modulator (M10, M20, M30, M40) geeignet ist, das extrahierte optische Signal mit einem zu übertragenden Informationssignal zu modulieren, und über den Rückkanal des Kommunikationsnetzes zu übertragen.

3. Verfahren zum Übertragen eines Informationssignals über den Rückkanal eines Kommunikationsnetzes mit einem Vorwärts- und einem Rückkanal,
**dadurch gekennzeichnet,**
daß im Vorwärtskanal optische Signale im Wellenlängenmultiplex übertragen werden, wobei die optischen Signale mindestens ein moduliertes und mindestens ein unmoduliertes optisches Signal beinhalten, daß das unmodulierte Signal als CW-Licht übertragen wird, daß aus den über den Vorwärtskanal empfangenen optischen Signalen ein bestimmtes, unmoduliertes optisches Signal extrahiert wird, und daß das extrahierte optische Signal mit dem zu übertragenden Informationssignal moduliert und anschließend über den Rückkanal ausgesandt wird.

4. Verfahren zum Übertragen eines Informationssignals über den Rückkanal eines Kommunikationsnetzes mit einem Vorwärts- und einem Rückkanal, dadurch gekennzeichnet, daß im Vorwärtskanal optische Signale im Wellenlängenmultiplex übertragen werden, wobei die optischen Signale mindestens ein moduliertes und mindestens zwei unmodulierte optische Signale auf verschiedenen Wellenlängen beinhalten, daß aus den über den Vorwärtskanal empfangenen optischen Signalen mindestens zwei bestimmte, unmodulierte optische Signale extrahiert werden, und daß die extrahierten optischen Signale jeweils mit einem zu übertragenden Informationssignal moduliert und anschließend gemeinsam über den Rückkanal ausgesandt werden.

5. Sende-/Empfangseinrichtung eines Kommunikationsnetzes mit einem Vorwärts- und einem Rückkanal,
dadurch gekennzeichnet,
daß eine Empfangseinheit (11) vorgesehen ist, um im Vorwärtskanal im Wellenlängenmultiplex übertragene optische Signale beinhaltend mindestens ein moduliertes und mindestens zwei unmodulierte optische Signale auf verschiedenen Wellenlängen zu empfangen sowie mindestens zwei bestimmte, unmodulierte optische Signale aus den optischen Signalen zu extrahieren, daß mindestens zwei Modulatoren (M1, M2, M3, M4) vorgesehen sind, um die mindestens zwei extrahierten optischen Signale jeweils mit einem zu übertragenden Informationssignal zu modulieren, und daß ein Multiplexer (13) vorgesehen ist, um die modulierten Signale im Wellenlängenmultiplex gemeinsam über den Rückkanal des Kommunikationsnetzes zu übertragen.

6. Sende-/Empfangseinrichtung nach Anspruch 2 oder 5, dadurch gekennzeichnet, daß die Empfangseinheit (11, 15) als Wellenlängendemultiplexer ausgebildet ist.

7. Verfahren zum Übertragen von Informationssignalen nach dem Verfahren des optischen Überlagerungsempfangs, dadurch gekennzeichnet, daß mindestens eine unmodulierte Trägerfrequenz und mindestens zwei mit Informationssignalen modulierte Trägerfrequenzen auf mindestens zwei unterschiedlichen Wellenlängen oder mindestens zwei unmodulierte Trägerfrequenzen und mindestens zwei mit Informationssignalen modulierte Trägerfrequenzen auf mindestens einer Wellenlänge übertragen werden.
